# EUROPEAN PATENT APPLICATION

(11) **EP 1 906 694 A1**
(43) Date of publication of application: **02.04.2008**
(21) Application number: 07121715.2
(22) Date of filing: 07.10.2003
(51) Int. Cl.: H04Q 7/38

(54) **Quality of service mapping between various types of wireless communication systems**

(30) Priority: 08.10.2002 US 417088 P
(62) Divisional of application: 03776252.3
(71) Applicant: INTERDIGITAL TECHNOLOGY CORPORATION, Wilmington, DE 19810 (US)
(72) Inventor: Hunkeler, Teresa, Joanne, Montreal Québec H4A 2V1 (CA); Ozluturk, Fatih, Port Washington, NY 11050 (US)
(74) Representative: Engdahl, Stefan

(57) **Abstract**

A method and system for mapping quality of service requirements between various types of wireless communication systems is disclosed. The mapping is performed according to the type of systems across which the mapping is being provided.

## Description

FIELD OF INVENTION

The present invention generally relates to wireless communication systems. More specifically, the present invention relates to quality of service in wireless communication systems.

BACKGROUND OF THE INVENTION

The particular type of wireless communication system over which wireless transmit/receive units (WTRU_{S}) operate may vary. For example, users may travel from one area where a particular type of wireless communication system is deployed to another area where a different type of wireless communication system is deployed. Additionally, users may be located in an area where they have the option of choosing between two or more types of wireless communication systems.

Quality of service requirements are provided in wireless communication systems for various types of services to ensure that the various types of services are supported at reasonable performance levels. These quality of service requirements, however, do not exist in some systems, are defined differently in different systems, and are often inadequately defined. For example, a particular type of service in one system may be supported at a quality of service that is based on a certain frame error rate (FER). The quality of service, however, for that same service in another system may be inadequately defined or defined with a quality of service that is based on a different parameter such as, for example, signal-to-interference ratio (SIR), average number of packet repeats, or any other parameter other than FER. This poses problems for operating WTRUs across different types of wireless communication systems.

It would therefore be desirable to provide mapping between various types of wireless communication systems to ensure seamless operation across systems.

SUMMARY

The present invention is a method and system for mapping quality of service requirements between various types of wireless communication systems. The mapping is performed according to the type of systems across which the mapping is being provided.

BRIEF DESCRIPTION OF THE DRAWINGS

Figure 1 illustrates overlapping coverage areas of various types of wireless communication systems.

Figure 2 is a plurality of wireless communication systems wherein a WTRU is capable of operating across the plurality of wireless communication systems while maintaining a required level of quality of service.

Figures 3 and 4 are embodiments of a WTRU that is capable of mapping quality of service requirements between various types of communication systems.

Figure 5 is a method wherein quality of service requirements may be mapped across various types of wireless communication systems.

DETAILED DESCRIPTION OF THE PREFERRED EMBODIMENTS

The present invention is described with reference to the drawing figures wherein like numerals represent like elements throughout.

It should be noted that the term base station includes but is not limited to a base station, Node-B, site controller, access point or any other type of interfacing device in a wireless environment. The term wireless transmit/receive unit (WTRU) includes but is not limited to a user equipment, mobile station, fixed or mobile subscriber unit, pager, or any other type of device capable of operating in a wireless environment. The terms system and network are used interchangeably herein as are the terms translate and map when referring to conversion of quality of service (QoS) requirements between various types of wireless communication systems.

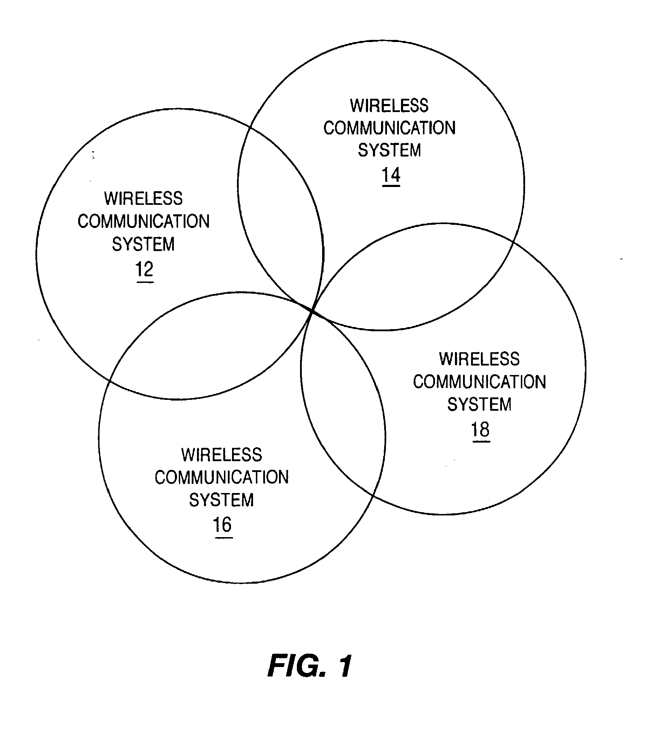

Referring now to Figure 1, there is shown approximate coverage areas for a plurality of different types of wireless communication systems 12, 14, 16, 18. The coverage areas of systems 12, 14, 16, 18 are shown in a particular arrangement, but may, of course, have any type of deployment arrangement based on operator preference. Furthermore, while four types of wireless communication systems are shown for purposes of describing the present invention, there may be any number of types of wireless communication systems.

Each wireless communication system includes a number of service types wherein a particular QoS requirement is set for each service type. Of particular interest are those service types that relate to user data, such as for example bearer services. Bearer services are any type of service that allows transmission of user-information signals between user-network interfaces in a wireless communication system.

At a high level, QoS requirements for bearer services are defined in terms of, for example, maximum transfer delay, delay variation, bit or frame error ratio (i.e., BER or FER), and data rate. Although the QoS requirements for bearer services are generally defined with at least one of these four parameters, there is no standardization of QoS requirements across different types of wireless communication systems. Accordingly, in the present invention, QoS requirements between various types of wireless communication systems are mapped in order to allow seamless operation across the various types of wireless communication systems. The mapping of QoS requirements may be performed in the system itself as part of the handover process, for example, or in the WTRU and may be performed across all types of wireless communication systems whether currently known or later developed.

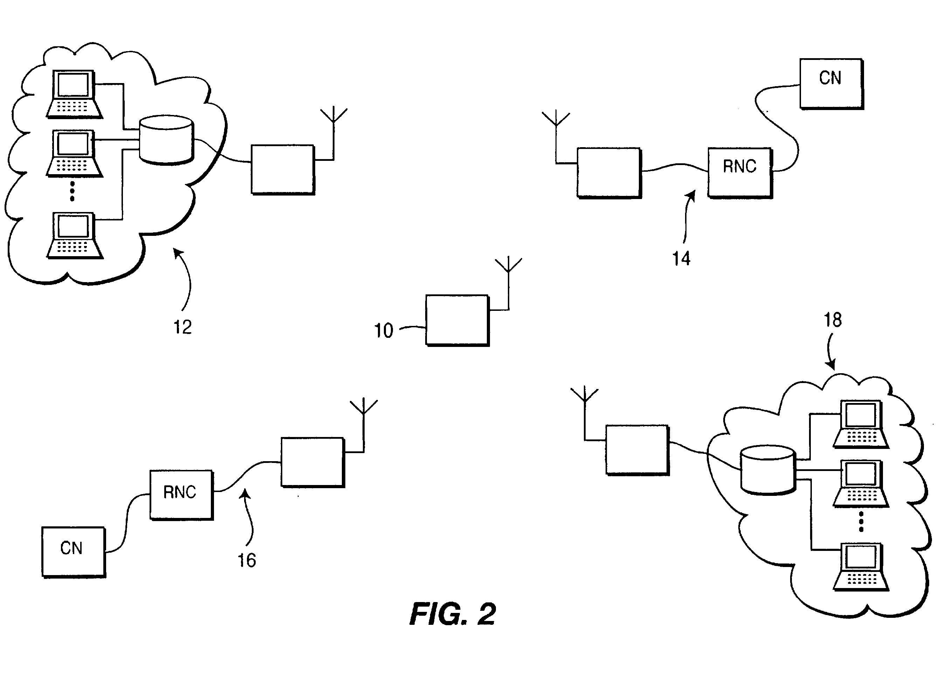

Referring now to Figure 2, examples of different types of wireless communication systems 12, 14, 16, 18 are shown. In this example, systems 12, 18 are wireless local area network (WLAN) type wireless communication systems while systems 14, 16 are cellular type wireless communications systems. WLAN type wireless communication systems include wireless local area networks, wireless personal area networks, metropolitan area networks, Bluetooth, 802.11, or the like and are collectively referred to as WLAN type wireless communication systems. Cellular type wireless communication systems include any type of cellular type system including UMTS-FDD, UMTS-TDD, EDGE, GSM/GPRS, CDMA 2000, and TD-SCDMA, for example and are collectively referred to as cellular type wireless communication systems. In this embodiment, WTRUs such as WTRU 10 are capable of seamless operation across the various wireless communication systems 12, 14, 16,18.

For example, assume WTRU 10 is utilizing a conversational voice application or service in system 14 which for purposes of this example is a CDMA 2000 system and switches, for whatever reason, to system 16 which again for purposes of this example is a UMTS system. In such a scenario, the QoS requirements of a conversational voice application are defined differently in CDMA 2000 than they are in UMTS. Therefore, to continue running the conversational voice application (i.e., maintain the user's telephone conversation) the WTRU 10 is configured with an interface such as a QoS translator so that the QoS requirements which are specified in CDMA 2000 language are translated to UMTS language.

It should be noted that the QoS translator may be utilized to ensure seamless operation between any two types of wireless communication systems. By way of example, an explanation of a WTRU operating across a UMTS system and a WLAN type wireless communication system is provided below.

Referring still to Figure 2, assume system 16 is a UMTS system and WTRU 10 has an ongoing interactive game application running in UMTS on system 16 and further that WTRU 10 is going to handover to system 18 which is a WLAN type system.

As mentioned above, wireless communication systems have specific QoS definitions for each service type and use different languages when transmitting information over their respective bearer service. By way of example, in UMTS, delay and BER requirements are often defined as shown in the table below (i.e., table 1) taken from 3^{rd} Generation Partnership Project Technical Specification (3GPP TS) 22105 v620.

**Table 1.**

| | | |
|---|---|---|
| | **Real Time (Constant Delay)** | **Non Real Time (Variable Delay)** |
| **Operating environment** | **BER/Max Transfer Delay** | **BER/Max Transfer Delay** |
| **Satellite (Terminal relative speed to ground up to 1000 km/h for plane)** | Max Transfer Delay less than 400 ms | Max Transfer Delay 1200 ms or more (Note 2) |
| | BER 10-3 - 10-7 (Note 1) | BER = 10-5 to 10-8 |
| **Rural outdoor (Terminal relative speed to ground up to 500 km/h) (Note 3)** | Max Transfer Delay 20 - 300 ms | Max Transfer Delay 150 ms or more (Note 2) |
| | BER 10-3 - 10-7 (Note 1) | BER = 10-5 to 10-8 |
| **Urban/ Suburban outdoor (Terminal relative speed to ground up to 120 km/h)** | Max Transfer Delay 20 - 300 ms | Max Transfer Delay 150 ms or more (Note 2) |
| | BER 10-3- 10-7 (Note 1) | BER = 10-5 to 10-8 |
| **indoor/ Low range outdoor (Terminal relative speed to ground up to 10 km/h)** | Max Transfer Delay 20 - 300 ms | Max Transfer Delay 150 ms or more (Note 2) |
| | BER 10-3- 10-7 (Note 1) | BER = 10-5 to 10-8 |
| NOTE 1: There is likely to be a compromise between BER and delay. | | |
| NOTE 2: The Max Transfer Delay should be here regarded as the target value for 95% of the data. | | |
| NOTE 3: The value of 500 km/h as the maximum speed to be supported in the rural outdoor environment was selected in order to provide service on high speed vehicles (e.g. trains). This is not meant to be the typical value for this environment (250 km/h is more typical). | | |

Similarly, QoS may also be defined in terms of the end user experience for real-time, interactive games, and streaming applications. By way of example, table 2, shown below, lists the end user QoS targets for UMTS and is also taken from 3GPP TS 22105 v620.

**Table 2.**

| **Medium** | **Application** | **Degree of symmetry** | **Data rate** | **Key performance parameters and target values** | | |
|---|---|---|---|---|---|---|
| | | | | End-to-end One-way Delay | Delay Variation within a call | Information loss |
| Audio | Conversational voice | Two-way | 4-25 kb/s | <150 msec preferred <400 msec limit Note 1 | < 1 msec | <3%FER |
| Video | Videophone | Two-way | 32-384 kb/s | < 150 msec preferred <400 msec limit Lip-synch : < 100 msec | | <1%FER |
| Data | Telemetry - two-way control | Two-way | <28.8 kb/s | < 250 msec | N/A | Zero |
| Data | Interactive games | Two-way | < 1 KB | < 250 msec | N/A | Zero |
| Data | Telnet | Two-way (asymmetric) | < 1 KB | < 250 msec | N/A | Zero |

In the current example, therefore, the exemplary QoS definitions in the above table for interactive games will have to translated (i.e., mapped) to whatever definitions are used by system 18. Translation of the interactive games QoS requirements will enable the interactive game to continue despite the user switching to the WLAN type system 18.

The translation or mapping between various types of wireless communication systems may be performed in any manner, as desired, with the important point being that such mapping occurs. Purely by way of example, the following table (i.e., table 3) shows a possible mapping of QoS requirements between a UMTS system and a WLAN type system. This table assumes system 18 is an 802.11 type network, but as mentioned the system 18 may be any type of WLAN type system.

**Table 3.**

| **802.11e Parameter** | **Possible Mapping from UMTS QoS Classes** |
|---|---|
| Traffic Type (TS Info) | 1: Conversational |
| | 0: Streaming, Interactive, Background |
| Ack Policy (TS Info) | No acknowledgement: Conversational, Streaming Acknowledgement: Interactive, Background |
| FEC (TS Info) | N/A |
| User Priority (0-7) (TSinfo) | 2 : Conversational |
| | 3: Streaming |
| | 4,5,6 : Interactive (Traffic Handling Priorities) |
| | 7 (Lowest): Background |
| Direction (TS Info) | Uplink/Downlink |
| Inactivity Interval | N/A |
| Nominal MSDU Size | N/A (23.107 defines maximum SDU size) |
| Minimum Data Rate | Guaranteed bit rate |
| Mean Data Rate | N/A |
| | |
| Maximum Burst Size | Maximum SDU size |
| Minimum Tx Rate | N/A |
| Delay Bound | Transfer Delay, if applicable |
| Jitter Bound | N/A |

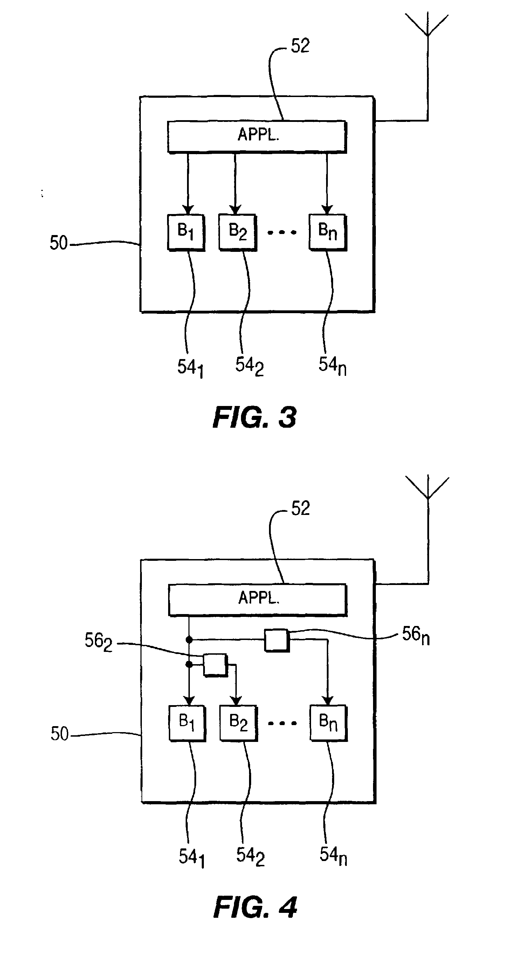

It is important to note that the mapping may be performed not only in a WTRU, but may also be performed in the system itself. Of course, when performed in the system, the mapping may be performed in any system component as desired. Figures 3 and 4 are examples wherein translation of QoS requirements is performed in the WTRU and are described below.

Referring now to Figure 3, there is shown a WTRU 50 wherein QoS requirements of various wireless communication systems may be mapped across various types of wireless communication systems. The WTRU 50 includes an application 52 and a plurality of bearers 54₁, 54₂, and 54n, which will be collectively referred to using reference numeral 54. In this embodiment, the application 52 includes the mapping functionality. That is, in the example outlined above, prior to handover the user is operating in the UMTS system 16. Therefore, the application 52 is providing QoS requirements to the UMTS bearer, say bearer 54₁, and those QoS requirements are defined according to UMTS specifications. Once the user hands over to the WLAN type system 18, another bearer, say bearer 54₂, is used to transmit information in system 18. However, information transmission in the WLAN type system 18 has different QoS definitions that must now be utilized when transmitting information over bearer 54₂. This is a problem in that because the application was initiated while operating in the UMTS system 16, the application 52 is speaking in terms of UMTS. Therefore, to continue running the application when the user hands over to system 18, the application stops sending information over bearer 54₁ using UMTS QoS definitions and begins sending information over bearer 54₂ using appropriate QoS definitions for WLAN type system 18. It should be noted that, as mentioned, system 18 may be any type of WLAN type system and therefore the appropriate QoS definitions may vary accordingly. It should also be noted that the number of bearers 54 that are provided preferably corresponds to the number of system types across which a WTRU may operate seamlessly. Preferably, the application is configured to translate between every system type for which a bearer, or the like, is provided.

Referring now to Figure 4, another embodiment is shown wherein the WTRU 50 is again capable of operating seamlessly across any number of various types of wireless communication systems, as desired. In this embodiment, the translation or mapping functionality is separate from the application 52. This arrangement may be preferred in that the application may operate as normal without also being responsible for translating QoS requirements for various types of wireless communication systems.

In this embodiment, translators 56₂, 56ₙ are provided between the application and, preferably, each bearer except one. Therefore, in situations where application 52 is initiated in a particular type of system, say CDMA 2000, and the user continues operating in that system, the application 52 may communicate directly with bearer 54₁ without having to translate the CDMA 2000 QoS requirements. This is preferably how service is provided in any type of wireless communication system where the user is not going to handover from one system type to another system type. That is, if WTRU 50 was to switch from CDMA 2000 to UMTS, for example, and initiate a UMTS application, application 52 and bearer 54₁ would then communicate directly using UMTS QoS requirements.

Where users do handover from one system type to another system type, the application 52 will communicate with the respective bearer of the system to which the user is handing over to. Furthermore, the application 52 will continue running as normal, but its communication with the respective bearer will be appropriately translated prior to receipt by the respective bearer. For example, assuming a handover from a GSM system to an 802.11 network, once handover occurs, communication from application 52 is routed to the 802.11 bearer, say bearer 54ₙ. Although the application was initiated while the user was operating in a GSM system, and therefore the application is specifying QoS requirements in terms of GSM, those QoS requirements are translated by bearer 54ₙ's respective translator 56ₙ thereby providing the user with seamless operation across the GSM and 802.11 systems.

Where a handover between different system types occurs and the translation or mapping function is performed in the system itself, the bearer continues to be specified in terms of the system from which the handover occurred. The system to which the user is handing over to, however, recognizes that the QoS requirements are being communicated to it based on definitions from another type of wireless communication system (or are inadequately defined) and translates them appropriately. This enables whatever application or service that was initiated by a user in one system type to continue seamlessly despite the user handing over to another system type. This arrangement also does not require the WTRU that is handing over, to be configured as explained in Figures 3 and 4, for example.

As previously mentioned, mapping of QoS requirements may be performed in any system component as desired. By way of example, however, in cellular type wireless communication systems, the mapping may occur in the core network in either, again by way of example, the serving GPRS support node (SGSN) or the home location register (HLR). Of course, in such systems, the mapping may also be performed in the base station or radio network controller (RNC). With respect to WLAN type systems, the mapping may again be performed in any system component as desired. By way of example, the mapping may be performed in an access point, access router, or computer network portion of such systems.

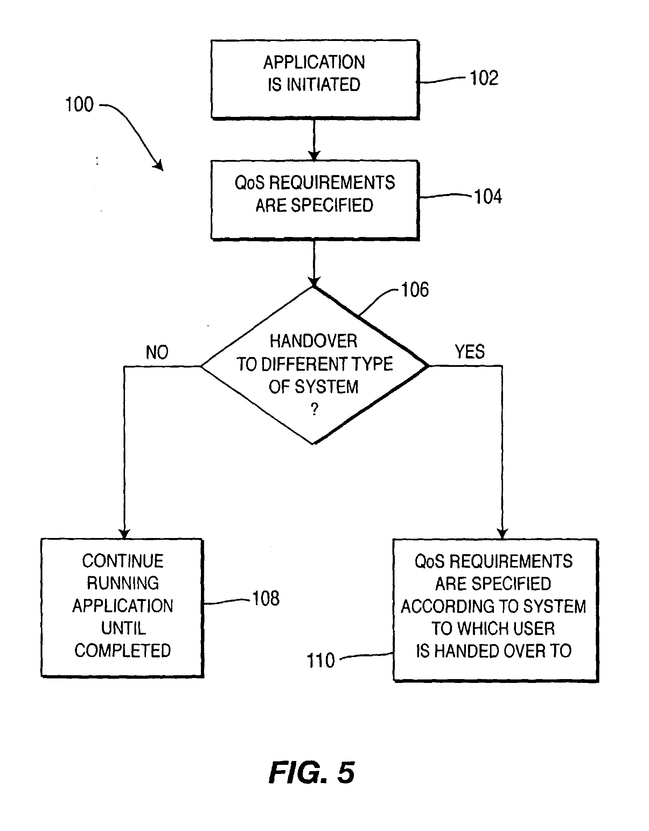

Referring now to Figure 5, a method 100 is shown for mapping QoS requirements between various types of wireless communication systems. In step 102, the method 100 begins wherein an application or service is initiated in a particular type of wireless communication system. Then, in step 104, QoS requirements are specified on a bearer, or the like, in accordance with the QoS requirements of the particular type of wireless communication system in which the application was initiated.

In step 106, it is determined whether there is handover to another type of wireless communication system. If no, the method 100 proceeds to step 108 wherein the application or service continues until completed or otherwise ended. If yes, the method 100 proceeds to step 110 wherein QoS requirements are specified in accordance with the QoS requirements of the wireless communication system to which the user is handing over to. This enables a connection and/or session to continue seamlessly from one system type to another.

If translation occurs in the WTRU, the QoS requirements are specified on a bearer, or the like, in accordance with the QoS requirements of the system to which the user is handing over to. If translation occurs in the system, the QoS requirements are specified on a bearer, or the like, according to the QoS requirements of the system from which the user is handing over from and the system which the user is handing over to performs the appropriate translation.

Although the present invention has been described in conjunction with particular types of wireless communication systems, the present invention is not limited thereto and instead may be implemented across all types of wireless communication systems. Furthermore, although cellular and WLAN type systems were mentioned, other types of wireless communication systems such as, for example, infrared are certainly within the scope of the present invention.

In addition to the above, while the present invention has been described in terms of various embodiments, other variations, which are within the scope of the invention as outlined in the claims below will be apparent to those skilled in the art.

### ITEMIZED LIST

Item 1. A wireless transmit/receive unit (WTRU) configured for seamless operation across various types of wireless communication systems, comprising:
   at least one application for performing a wireless service wherein the application is configured to translate quality of service requirements across various types of wireless communication systems; and
   at least one bearer for transmitting user-information signals between user-network interfaces.
Item 2. The WTRU of item 1, wherein the application is configured to receive incoming quality of service requirements specified according to one type of wireless communication system and translate the requirements to output the requirements according to another type of wireless communication system.
Item 3. The WTRU of item 2 further including a plurality of bearers, wherein the number of bearers corresponds to the number of wireless communication systems that the application is capable of translating.
Item 4. The WTRU of item 1, wherein the WTRU hands over from a first cellular type wireless communication system to a second cellular type wireless communication system and the application translates quality of service requirements of the first system to that of the second system in order to continue a service initiated in the first system.
Item 5. The WTRU of item 4, wherein the first cellular type wireless communication system is a UMTS system and the second cellular type wireless communication system is a CDMA 2000 system.
Item 6. The WTRU of item 1, wherein the WTRU hands over from a cellular type wireless communication system to a wireless local area network (WLAN) type wireless communication system and the application translates quality of service requirements of the cellular type system to that of the WLAN type system in order to continue a service initiated in the cellular system.
Item 7. The WTRU of item 1, wherein the WTRU hands over from a wireless local area network (WLAN) type wireless communication system to a cellular type wireless communication system and the application translates quality of service requirements of the WLAN type system to that of the cellular type system in order to continue a service initiated in the WLAN system.
Item 8. A wireless transmit/receive unit (WTRU) configured for seamless operation across various types of wireless communication systems, comprising:
   at least one application for performing a wireless service;
   at least one bearer for transmitting user-information signals between user-network interfaces; and
   at least one translator between the application and the bearer for translating quality of service requirements whereby sessions established in a first wireless communication system may continue when the WTRU hands over to other various types of wireless communication systems.
Item 9. The WTRU of item 8, wherein the translator is configured to receive incoming quality of service requirements specified according to one type of wireless communication system and translate the requirements to output the requirements according to another type of wireless communication system.
Item 10. The WTRU of item 8, wherein incoming quality of service requirements are received and are routed to an appropriate translator and bearer to continue operation of the application while the WTRU hands over between various types of wireless communication systems.
Item 11. The WTRU of item 8, wherein the WTRU hands over from a first cellular type wireless communication system to a second cellular type wireless communication system and the translator translates quality of service requirements of the first system to that of the second system in order to continue a service initiated in the first system.
Item 12. The WTRU of item 11, wherein the translated quality of service requirements are transmitted over a bearer service corresponding to the second system.
Item 13. The WTRU of item 11, wherein the first cellular type wireless communication system is a UMTS system and the second cellular type wireless communication system is a CDMA 2000 system.
Item 14. The WTRU of item 8, wherein the WTRU hands over from a cellular type wireless communication system to a wireless local area network (WLAN) type wireless communication system and the translator translates quality of service requirements of the cellular type system to that of the WLAN type system in order to continue a service initiated in the cellular system.
Item 15. The WTRU of item 14, wherein the translated quality of service requirements are transmitted over a bearer service corresponding to the WLAN type system.
Item 16. The WTRU of item 8, wherein the WTRU hands over from a wireless local area network (WLAN) type wireless communication system to a cellular type wireless communication system and the application translates quality of service requirements of the WLAN type system to that of the cellular type system in order to continue a service initiated in the WLAN system.
Item 17. The WTRU of item 16, wherein the translated quality of service requirements are transmitted over a bearer service corresponding to the cellular type system.
Item 18. A wireless communication system, comprising
   at least one interfacing device through which wireless transmit/receive units (WTRUs) may interface with the wireless communication system; and
   means for receiving quality of service requirements from a WTRU requesting handover to the wireless communication system wherein the quality of service requirements are specified according to a different type of wireless communication system from which the WTRU is requesting handover from and translating the quality of service requirements to continue a service initiated in the system from which the WTRU is requesting handover from.
Item 19. The wireless communication system of item 18, wherein the wireless communication system is a cellular type wireless communication system and the translation of quality of service requirements is performed in the core network.
Item 20. The wireless communication system of item 18, wherein the wireless communication system is a wireless local area network (WLAN) type wireless communication system and the translation of quality of service requirements is performed at an access point.
Item 21. The wireless communication system of item 20, wherein the translation of quality of service requirements is performed at an access router.
Item 22. A method for providing seamless handover between various types of wireless communication systems, comprising the steps of:
   initiating an application in a wireless transmit/receive unit (WTRU) in a first type of wireless communication system;
   requesting handover of the WTRU from the first system to a second type of wireless communication system;
   translating quality of service requirements from the specifications of the first system to the specifications of the second system;
   handing over the WTRU to the second system; and
   continuing in the second system the application that was initiated in the first system, wherein the application is continued with the quality of service requirements specified according to the specifications of the second system.
Item 23. The method of item 22, wherein the application is continued in the second system using a bearer that corresponds to the second system.

## Claims

1. A method for handover between two wireless communication systems having different quality of service (QoS) requirements, the method comprising the steps of:
determining (106) whether a handover from a first wireless communication system to a second wireless communication system is required;
initiating (110) a handover procedure from the first wireless communication system to the second wireless communication system if the handover is required, otherwise continuing (108) to receive a service from the first wireless communication system;
translating (110) a QoS requirement for the service in the first wireless communication system into a corresponding QoS requirement in the second wireless communication system; and
continuing the service in the second wireless communication system in accordance with the translated QoS requirement.

2. The method of claim 1 wherein the QoS requirements are defined by at least one of maximum transfer delay, delay variation, bit error rate, frame error rate, data rate, type of application, and degree of symmetry.

3. The method of claim 1 wherein the first wireless communication system (12, 14, 16, 18) is a cellular type communication system and the second wireless communication system (12, 14, 16, 18) is a wireless local area network type communication system.

4. The method of claim 1 wherein the first wireless communication system (12, 14, 16, 18) is a wireless local area network type communication system and the second wireless communication system (12, 14, 16, 18) is a cellular type communication system.

5. The method of claim 1 wherein the translation of the QoS requirement is performed by a wireless transmit/receive unit (50).

6. The method of claim 1 wherein the translation of the QoS requirement is performed by one of the first wireless communication system (12, 14, 16, 18) and the second wireless communication system (12, 14, 16, 18).

7. A wireless transmit/receive unit (WTRU, 50) for handover between two wireless communication systems (12, 14, 16, 18) having different quality of service (QoS) requirements for services, the WTRU comprising:
a translator (56) configured to translate a QoS requirement for the service in a first wireless communication system into a corresponding QoS requirement in a second wireless communication system, whereby the WTRU continues to receive the service in the second wireless communication system in accordance with the translated QoS requirement after handover to the second wireless communication system.

8. The WTRU (50) of claim 7 wherein the QoS requirements are defined by at least one of maximum transfer delay, delay variation, bit error rate, frame error rate, data rate, type of application, and degree of symmetry.

9. The WTRU (50) of claim 7 wherein the first wireless communication system (12, 14, 16, 18) is a cellular type communication system and the second wireless communication system (12, 14, 16, 18) is a wireless local area network type communication system.

10. The WTRU (50) of claim 7 wherein the first wireless communication system (12, 14, 16, 18) is a wireless local area network type communication system and the second wireless communication system (12, 14, 16, 18) is a cellular type communication system.
